# FASCICULE DE BREVET EUROPEEN

(11) **EP 0 881 413 B1**
(45) Date de publication et mention de la délivrance du brevet: **04.04.2001**
(21) Numéro de dépôt: 98108401.5
(22) Date de dépôt: 08.05.1998
(51) Int. Cl.: F16H 59/02

(54) **Dispositif de commande d'une boîte de vitesses automatique à rapports etages**
Vorrichtung zum Schalten eines automatischen Stufengetriebes
Shift actuator for an automatic multi-stage gearbox

(30) Priorité: 30.05.1997 FR 9706643
(43) Date de publication de la demande: 02.12.1998
(73) Titulaire: AUTOMOBILES PEUGEOT, 75116 Paris (FR); AUTOMOBILES CITROEN, 92200 Neuilly-sur-Seine (FR)
(72) Inventeur: Chretien, Philippe, 78430 Louveciennes (FR)
(74) Mandataire: Gendraud, Pierre

(56) Documents cités:
- EP-A- 0 331 797
- EP-A- 0 718 527
- EP-A- 0 754 884

## Description

L'invention se rapporte à un dispositif de commande d'une boîte de vitesses automatique de véhicule automobile.

Elle concerne un tel dispositif dans lequel un levier de manoeuvre peut se déplacer alternativement suivant une première ligne pour sélectionner successivement plusieurs états de fonctionnement de la boîte de vitesses (tels que parcage, marche arrière, point mort ou neutre, marche avant normale, correspondant respectivement à des positions du levier classiquement repérées P,R,N,D ou A), ou suivant une seconde ligne sensiblement parallèle à la première pour commander par impulsions dans un sens ou dans l'autre respectivement des montées ou des descentes de rapports de la boîte de vitesses, ou de limitations supérieures de passage automatique de ces rapports, (voir par example EP-A-331797).

Une telle disposition est généralement préférée à celles plus usuelles où les limitations de rapports sont obtenues en plaçant le levier en plusieurs positions (repérées 3,2 et 1 ou L pour une boîte à 4 rapports) situées en prolongement de la susdite première ligne, qui est alors unique et s'avère excessivement longue. La commande impulsionnelle est plus ergonomique notamment parce qu'elle n'implique que de faibles déplacements du levier à partir d'une position initiale constante, qui peut être celle, ou voisine de celle (D ou A) correspondant au fonctionnement automatique normal en marche avant de la boîte de vitesses sans limitation de ses rapports.

Toutefois la réalisation des commandes en question, à impulsions dans une seconde ligne, présente une difficulté notable lorsque les deux lignes sont sensiblement parallèles, car elle implique généralement de désolidariser du levier de manoeuvre des moyens de transmission mécanique le reliant à un contacteur multiple de la boîte de vitesses lorsqu'il passe de la première ligne à la seconde ligne, dans laquelle il peut actionner alternativement deux contacteurs d'impulsions.

L'invention vise à résoudre cette difficulté par une réalisation ne nécessitant pas la désolidarisation susmentionnée du lever.

A cet effet, elle concerne un dispositif de commande d'une boîte de vitesses à rapports étagés déterminés par un calculateur électronique, dans laquelle un levier de manoeuvre peut être déplacé alternativement suivant une première ligne, avec des positions P,R,N,D correspondant à la sélection de plusieurs états de fonctionnement (parcage 〈〈 P 〉〉, marche arrière 〈〈 R 〉〉, point mort 〈〈 N 〉〉 et marche avant 〈〈 D 〉〉) commandés au calculateur par un contacteur multi-positions dit contacteur multiple que le levier actionne par l'intermédiaire de moyens de liaison mécaniques, et suivant une seconde ligne sensiblement parallèle à la première pour actionner par impulsions dans les deux sens, à partir d'une position initiale M du levier située au droit de sa position D de marche avant dans la première ligne, respectivement deux contacteurs fugitifs aptes à commander au calculateur l'un une montée et l'autre une descente de rapports ou de limitations de rapports, lesdits moyens mécaniques comportant des moyens d'indexation propres à maintenir alternativement le contacteur multiple dans ses diverses positions.

Selon l'invention, lesdits moyens mécaniques relient en permanence le levier au contacteur multiple, et les moyens d'indexation comprennent des moyens de rappel élastique propres à ramener le lever de manoeuvre à sa position initiale susdite M quand il en est écarté, dans la seconde ligne, de manière à actionner l'un ou l'autre des deux contacteurs fugitifs.

Selon quelques dispositions intéressantes de l'invention :
- les moyens d'indexation comprenant un secteur circulaire muni sur sa périphérie de crans propres à coopérer avec un poussoir centripète, les moyens de rappel sont constitués par ce poussoir et par deux rampes prolongeant des deux côtés, sur la périphérie du secteur, un des crans qui correspond à la position initiale M du levier;
- les contacteurs fugitifs étant disposés près du levier de manoeuvre de manière à être actionnés par lui directement, la commande adressée par le contacteur multiple au calculateur pour sélectionner l'état ("D") de marche avant est maintenue pour les positions de ce contacteur correspondant à celles du levier actionnant l'un ou l'autre des deux contacteurs fugitifs (20,21).
- les contacteurs fugitifs sont intégrés au contacteur multiple, de sorte que celui-ci commande au calculateur une montée ou une descente de rapports ou de limitations de rapports quand le levier est actionné par impulsions dans la seconde ligne, et le calculateur est programmé avec une stratégie restrictive évitant que cette commande soit prise en compte lors des déplacements du levier de sa position de marche avant D à sa position la plus proche N dans la première ligne ou réciproquement.

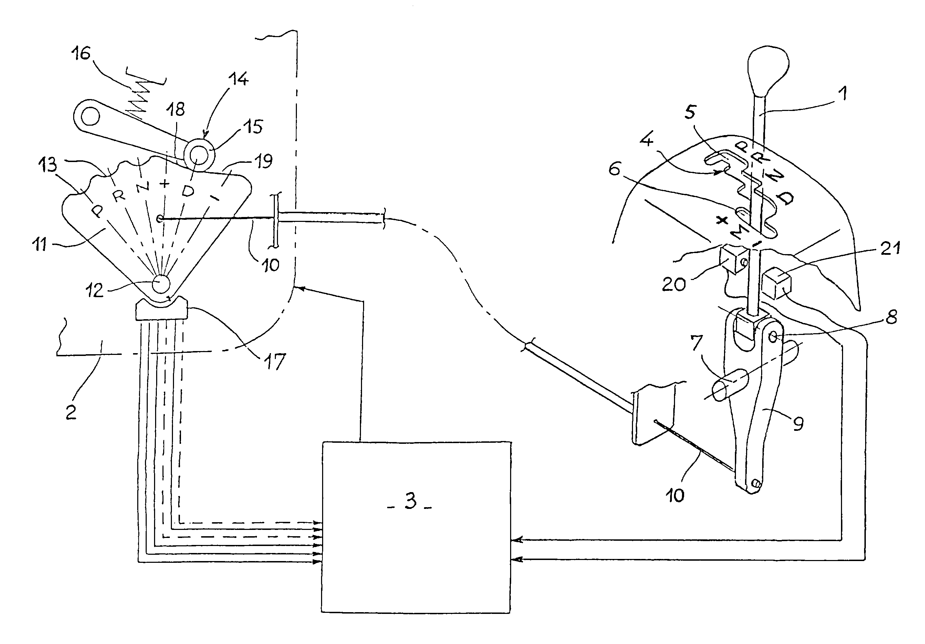

Un mode de réalisation du dispositif de commande selon l'invention est décrit ci-après, avec référence au dessin annexé dont la figure unique montre de façon simplifiée et en partie schématique un levier de manoeuvre 1 propre à commander une boîte de vitesses automatique 2 d'un véhicule par l'intermédiaire d'un calculateur électronique 3.

Le levier 1 est déplaçable dans une grille 4 suivant deux lignes approximativement parallèles à la direction longitudinale du véhicule : une première ligne 5 où sont repérées des positions P,R,N,D et une seconde ligne 6 où deux positions repérées + et - se trouvent de part et d'autre d'une position initiale M située au droit de la position D, moins éloignées de celle-ci, en direction longitudinale, que la position N.

Le levier 1 peut basculer longitudinalement sur un axe 7 porté par une pièce fixe non représentée, et transversalement sur un axe 8 porté par un bras 9 solidaire de l'axe 7 et relié par un câble 10 à un secteur circulaire 11 apte à pivoter par un axe 12 sur la boîte de vitesses 2. En variante, le câble est remplacé par un autre moyen de transmission mécanique pouvant comporter au moins une tige et/ou un levier.

Le secteur 11 comporte sur sa périphérie des crans 13 dans lesquels peut s'engager successivement un poussoir centripète 14 lorsque le secteur pivote sur son axe 12. Ce poussoir, représenté ici avec un galet 15 engageable dans les crans, est sollicité en direction de l'axe 12 par un ressort 16.

Ces crans 13 sont situés de façon telle qu'à chaque position longitudinale P,R,N,D(ou M) du levier 1 corresponde une position angulaire P,R,N,D du secteur 11 pour laquelle le poussoir 14 soit engagé dans l'un des crans, ici repérés respectivement P,R,N et D selon leur correspondance avec la position du levier. Cette coopération entre le poussoir et les crans constitue ainsi un moyen d'indexation assurant l'immobilisation alternative dans ces positions P,R,N,D du levier 1 et du secteur 11. Celui-ci est associé à un contacteur multi-positions 17 -dit contacteur mutilple- qui est relié électriquement au calculateur 3 de manière à lui adresser des signaux commandant divers états de fonctionnement de la boîte de vitesses, respectivement parcage (〈〈 P 〉〉), marche arrière (〈〈 R 〉〉), point mort ou neutre (〈〈 N 〉〉), et marche avant sans limitation de rapports (〈〈 D 〉〉), correspondant aux positions P,R,N,D du secteur et du levier.

Le cran repéré D est prolongé des deux côtés, sur la périphérie du secteur 11, par deux rampes 18,19 propres à écarter de l'axe 12 le poussoir 14 quand le secteur s'éloigne de sa position D jusqu'à l'une de ses positions ici repérées + et - correspondant respectivement aux positions analogues du levier. Ces rampes ont pour effet, en coopération avec la force centripète exercée par le poussoir, de ramener le cran D sous le galet 15, donc de rappeler le levier vers sa position initiale M quand il en est écarté vers l'une de ses positions + et -.

Deux contacteurs fugitifs 20,21 sont disposés près du levier 1 de façon que celui-ci les actionne alternativement quand -et seulement quand- il est déplacé par impulsion dans la seconde ligne 6, à partir de sa position initiale M, vers sa position + ou sa position -.

Chacun de ces contacteurs est relié électriquement au calculateur 3 de manière à lui adresser, quand il est actionné par le levier 1, un signal commandant une montée (pour le contacteur 20) ou une descente (pour le contacteur 21) de rapports de la boîte de vitesses, ou de limitations supérieures de ces rapports.

Des ressorts non représentés associés aux contacteurs 20 et 21 participent au rappel du levier 1 vers sa position initiale, en complément de l'action du poussoir 14 sur les rampes 18 et 19 du secteur cranté 11.

Le contacteur de position 17 est agencé de manière que le signal qu'il adresse au calculateur soit maintenu à celui correspondant à l'état de fonctionnement "D" de marche avant quand le secteur 11 est placé dans ses positions + et -.

Ainsi quand le lever 1 est déplacé dans la première ligne 5, il entraîne le secteur 11 en commandant successivement les états de la boîte de vitesses correspondant aux positions P,R,N, D, sans prise en compte des positions + et - du secteur puisque le levier n'intercepte pas les contacteurs fugitifs 20 et 21.

En variante, les capteurs fugitifs 20 et 21 sont non pas disposés près du levier 1 mais intégrés dans le contacteur multiple de manière à être actionnés l'un ou l'autre quand le secteur 11 est en position repérée + ou -. Le calculateur est alors programmé avec une stratégie restrictive telle que les signaux des capteurs fugitifs correspondant au passage du secteur à ses positions + et - ne soient pris en compte que lors d'une commande par impulsion du levier à partir de sa position initiale M dans la seconde ligne et non lors d'un passage du levier, donc du secteur, de sa position N à sa position D ou réciproquement.

Des dispositifs de commande selon ces deux modes de réalisation présentent l'avantage, par rapport aux solutions connues du même type, de ne pas nécessiter un habituel moyen d'accouplement permettant de désolisariser du levier de manoeuvre, quand il est déplacé de la première ligne à la deuxième ligne, les éléments de transmission mécanique le reliant au contacteur multiple.

## Revendications

1. Dispositif de commande d'une boîte de vitesses (2) à rapports étagés déterminés par un calculateur électronique (3), dans laquelle un levier de manoeuvre (1) peut être déplacé alternativement suivant une première ligne (5), avec des positions (P,R,N,D) correspondant à la sélection de plusieurs états de fonctionnement (parcage 〈〈 P 〉〉, marche arrière 〈〈 R 〉〉, point mort 〈〈 N 〉〉 et marche avant normale 〈〈 D 〉〉) commandés au calculateur par un contacteur multi-positions dit contacteur multiple (17) que le levier actionne par l'intermédiaire de moyens de liaison mécaniques (9, 10, 11), et suivant une seconde ligne (6) sensiblement parallèle à la première pour actionner par impulsions dans les deux sens, à partir d'une position initiale (M) du levier située au droit de la position (D) de marche avant dans la première ligne (5), respectivement deux contacteurs fugitifs (20,21) aptes à commander au calculateur l'un une montée et l'autre une descente de rapports ou de limitations de rapports, lesdits moyens mécaniques (9, 10, 11) comportant des moyens d'indexation (13,14) propres à maintenir alternativement le contacteur multiple (17) dans ses diverses positions,
caractérisé en ce que lesdits moyens mécaniques (9, 10, 11) relient en permanence le levier (1) au contacteur multiple (17), et les moyens d'indexation (13, 14) comprennent des moyens de rappel élastique (15, 16, 18, 19) propres à ramener le levier de manoeuvre (1) à sa position initiale (M) quand il en est écarté, dans la seconde ligne (6), de manière à actionner l'un ou l'autre des deux contacteurs fugitifs (20,21).

2. Dispositif selon la revendication 1,
caractérisé en ce que les moyens d'indexation (13, 14) comprennent un secteur circulaire (11) muni sur sa périphérie de crans (13) propres à coopérer avec un poussoir centripète (14), les moyens de rappel sont constitués par ce poussoir et par deux rampes (18, 19) prolongeant des deux côtés, sur la périphérie du secteur (11), un des crans (13) qui correspond à la position initiale (M) du levier (1).

3. Dispositif selon l'une des revendications 1 et 2, dans lequel les contacteurs fugitifs (20,21) sont disposés près du levier de manoeuvre (1) de manière à être actionnés par lui directement,
caractérisé en ce que la commande adressée par le contacteur multiple (17) au calculateur (3) pour sélectionner l'état ("D") de marche avant est maintenue pour les positions (+ et -) de ce contacteur correspondant à celles du levier actionnant l'un ou l'autre des deux contacteurs fugitifs (20,21).

4. Dispositif selon l'un des revendications 1 et 2,
caractérisé en ce que les contacteurs fugitifs sont intégrés au contacteur multiple (17), de sorte que celui-ci commande au calculateur (3) une montée ou une descente de rapports ou de limitations de rapports quand le levier (1) est actionné par impulsions dans la seconde ligne (6), et le calculateur est programmé avec une stratégie restrictive évitant que cette commande soit prise en compte lors des déplacements du levier de sa position (D) de marche avant à sa position (N) la plus proche dans la première ligne (5) ou réciproquement.

## Patentansprüche

1. Vorrichtung zum Schalten eines automatischen Stufengetriebes (2), wobei die Stufen durch einen elektronischen Rechner (3) bestimmt werden, und wobei im Getriebe ein Betätigungshebel (1) alternativ in einer ersten Gasse (5) mit Positionen (P, R, N, D), die der Auswahl mehrerer Funktionszustände (Parken "P", Rückwärtsfahrt "R", Leerlaufstellung "N" und normale Vorwärtsfahrt "D") entsprechen und die den Rechner durch einen Vielstellungsschalter ansteuern, der Vielfachschalter (17) genannt wird und den der Hebel mittels mechanischer Verbindungsmittel (9, 10, 11) betätigt, und in einer zweiten Gasse (6) bewegt werden kann, die im wesentlichen parallel zur ersten verläuft, um, von einer Ausgangslage (M) des Hebels ausgehend, die längs der Vorwärtsfahrt-Position (D) in der ersten Gasse (5) gelegen ist, durch Impulse in beiden Richtungen jeweils zwei Momentschalter (20, 21) zu betätigen, von denen der eine den Rechner zu einer Erhöhung und der andere zu einer Verringerung der Schaltverhältnisse oder der Schaltverhältnis-Begrenzungen ansteuert, wobei die genannten mechanischen Mittel (9, 10, 11) Indexierungsmittel (13, 14) aufweisen, die dazu eingerichtet sind, den Vielfachschalter (17) alternativ in seinen verschiedenen Lagen zu halten,
dadurch gekennzeichnet, daß die genannten mechanischen Mittel (9, 10, 11) ständig den Hebel (1) mit dem Vielfachschalter (17) verbinden, und daß die Indexierungsmittel (13, 14) elastische Rückstellmittel (15, 16, 18, 19) aufweisen, die dazu eingerichtet sind, den Betätigungshebel (1) in seine Ausgangslage (M) zu verbringen, wenn er aus dieser in der zweiten Gasse (6) herausbewegt ist, um derart den einen oder den anderen der beiden Momentschalter (20, 21) zu betätigen.

2. Vorrichtung nach Anspruch 1,
dadurch gekennzeichnet, daß die Indexierungsmittel (13, 14) einen Kreissektor (11) aufweisen, der auf seinem Umfang mit Kerben (13) versehen ist, die dazu eingerichtet sind, mit einem gegen den Mittelpunkt wirkenden Stößel (14) zusammenzuwirken, wobei die Rückstellmittel von diesem Stößel und zwei Rampen (18, 19) gebildet sind, die auf dem Umfang des Sektors (11) beide Seiten einer der Kerben (13) verlängern, die der Ausgangslage (M) des Hebels (1) entspricht.

3. Vorrichtung nach einem der Ansprüche 1 und 2, in der die Momentschalter (20, 21) dem Betätigungshebel (1) auf eine solche Weise naheliegen, daß sie von ihm unmittelbar betätigt werden können,
dadurch gekennzeichnet, daß der Steuerbefehl, der durch den Vielfachschalter (17) an den Rechner (3) gerichtet wird, um den Vorwärtsfahrtzustand ("D") zu wählen, für die Lagen (+ und -) dieses Schalters aufrechterhalten wird, die denen des Hebels entsprechen, wenn dieser den einen oder anderen der beiden Momentschalter (20, 21) betätigt.

4. Vorrichtung nach einem der Ansprüche 1 und 2,
dadurch gekennzeichnet, daß die Momentschalter in den Vielfachschalter (17) derart integriert sind, daß dieser dem Rechner (3) eine Erhöhung oder eine Verringerung der Schaltverhältnisse oder der Schaltverhältnis-Begrenzungen anweist, wenn der Hebel (1) durch Impulse in der zweiten Gasse (6) betätigt wird, und daß der Rechner mit einer restriktiven Strategie programmiert ist, die vermeidet, daß diese Anweisung berücksichtigt wird, wenn der Hebel aus seiner Vorwärtsfahrtlage (D) nach vorne in seine Lage (N) bewegt wird, die in der ersten Gasse (5) nächstgelegen ist, oder umgekehrt.

## Claims

1. Control device for a gear box (2) with staged ratios determined by an electronic computer (3), in which an operating lever (1) can be displaced alternately along a first line (5), with positions (P, R, N, D) corresponding to the selection of several operating states (park "P", reverse "R", neutral "N" and normal forward drive "D") controlled at the computer by a multi-position contactor known as a multiple contactor (17), which the lever actuates via mechanical linking means (9, 10, 11), and along a second line (6) substantially parallel to the first one in order to actuate, by pulses in both directions, starting from an initial position (M) of the lever located in line with the forward drive position (D) in the first line (5), two fugitive contactors (20, 21) respectively, one capable of controlling at the computer the moving up and the other the moving down through ratios or limitations of ratios, said mechanical means (9, 10, 11) comprising indexing means (13, 14) suitable for maintaining the multiple contactor (17) alternately in its various positions,
characterised in that said mechanical means (9, 10, 11) permanently connect the lever (1) to the multiple contactor (17), and the indexing means (13, 14) comprise resilient return means (15, 16, 18, 19) suitable for bringing the operating lever (1) back to its initial position (M) when it is moved away therefrom, in the second line (6), so as to actuate one or other of the two fugitive contactors (20, 21).

2. Device according to Claim 1,
characterised in that the indexing means (13, 14) comprise a sector of a circle (11) provided on its periphery with notches (13) suitable for cooperating with a centripetal push rod (14), the return means are constituted by this push rod and by two ramps (18, 19) extending on both sides, on the periphery of the sector (11), one of the notches (13), which corresponds to the initial position (M) of the lever (1).

3. Device according to one of Claims 1 and 2, in which the fugitive contactors (20, 21) are arranged near the operating lever (1) so as to be actuated by it directly,
characterised in that the command sent by the multiple contactor (17) to the computer (3) to select the forward drive state ("D") is maintained for the positions (+ and -) of this contactor corresponding to those of the lever actuating one or other of the two fugitive contactors (20, 21).

4. Device according to one of Claims 1 or 2,
characterised in that the fugitive contactors are integrated into the multiple contactor (17), so that the latter commands, at the computer (3), an instance of going or up coming down through ratios or limitations in ratios when the lever (1) is actuated by pulses in the second line (6), and the computer is programmed with a restrictive strategy preventing this command from being taken into account when the lever is displaced from its forward drive position (D) to its position (N) closest to the first line (5) or vice versa.
